# EUROPEAN PATENT APPLICATION

(11) **EP 2 479 627 A2**
(43) Date of publication of application: **25.07.2012**
(21) Application number: 11195607.4
(22) Date of filing: 28.03.2008
(51) Int. Cl.: G05B 19/042

(54) **Robot operator control unit configuration system and method**

(30) Priority: 29.03.2007 US 908932 P
(62) Divisional of application: 08780495.1
(71) Applicant: iRobot Corporation, Bedford, MA 01730 (US)
(72) Inventor: Jamieson, Josef, Billerica, MA 01821 (US); Shein, Andrew, Winchester, MA 01890 (US)
(74) Representative: Schley, Jan Malte

(57) **Abstract**

A unified framework is provided for building common functionality into diverse operator control units. A set of tools is provided for creating controller configurations for varied robot types. Preferred controllers do one or more the following: allow uploading of configuration files from a target robot, adhere to common user interface styles and standards, share common functionality, allow extendibility for unique functionality, provide flexibility for rapid prototype design, and allow dynamic communication protocol switching. Configuration files may be uploaded from robots to configure their operator control units. The files may include scene graph control definitions; instrument graphics; control protocols; or mappings of control functions to scene graphics or control inputs.

## Description

### CROSS-REFERENCE TO RELATED APPLICATIONS

This application claims priority under 35 U.S.C. §119(c) to U.S. provisional patent application Serial No. 60/908,932, filed on March 29, 2007, the entire contents of which are hereby incorporated by reference.

### TECHNICAL FIELD

This invention relates to robotic operator control units and their design and communications protocols, and specifically to an architecture and methods for automatically configuring operator control units based on configuration schema and protocol definitions provided from a robot or payload.

### BACKGROUND

Many robots such as, for example, tactical robots used for battlefield surveillance or bomb detection and handling, employ an operator control unit (OCU) allowing remote control of the robot and viewing of sensor and telemetry and other data from the robot. A preferred robot OCU typically has a graphical user interface (GUI) including, for example, instrument panels with instrument models displaying data from the robot, and a video display showing a video feed from one or more robot cameras. The GUI may also include menus and multiple screens, windows, or panels. Buttons, soft buttons, joysticks, touchscreens, and other user input devices present on the OCU receive operator control input, which is processed, formatted, and transmitted to the robot according to one or more communications protocols between the robot and the OCU.

Typically, a robot OCU is designed specifically for the robot type it is intended to control. Such a scenario results in an design OCU for every design or product line of robots, each OCU with a unique user interface, hard coded communication protocols, and specialized functionality for common tasks. Often little or no code may be shared among different OCU and protocol designs, and other elements such as, for example, but in mapping virtual instrument mapping. Further, with the robot end-user, this may create a difficult learning curve to drive the robot and limited ability to augment the user interface.

What is needed, therefore, is a unified framework for building common functionality into diverse operator control units. What is further needed is a system to support rapid control-unit prototyping and cross platform development for robotic controllers.

### SUMMARY

A unified framework is provided for building common functionality into diverse operator control units. A set of tools is provided for creating controller configurations for varied robot types. Preferred controllers do one or more the following: allow uploading of configuration files from a target robot, adhere to common user interface styles and standards, share common functionality, allow extendibility for unique functionality, provide flexibility for rapid prototype design, and allow dynamic communication protocol switching.

One embodiment provides a method of configuring a robot operator control unit including generating a configuration file for a robot; transmitting the configuration file from the robot to the operator control unit; and adjusting the operator control unit based on the configuration file. Variations of this method may include adjusting control configurations and display topology on the operator control unit based on the configuration file; and/or adjusting menu options on the operator control unit based on the configuration file.

Another embodiment provides a method of configuring a robot operator control unit including generating a configuration file for a robot; transmitting the configuration file from the robot to the operator control unit; adjusting control configurations on the operator control unit based on the configuration file; and adjusting display topology on the operator control unit based on the configuration file. Variations of this method may include adjusting menu options on the operator control unit based on the configuration file, or including a menu tree description including menu structure indicators and command identity indicators. A tagged markup language such as XML may be employed. The configuration file may include an indicator of one or more instrument scene graphics. Also, the configuration file may include one or more controller mapping indicators. To describe the robot visual control structure, the configuration file may use one of the one or more scene graph descriptors such as an OSG scene graph.

In further variations, the methods herein employ a configuration file including one or more protocol definitions. The protocol definitions may be formatted in a tagged markup language such as XML.

Another embodiment provides a method of configuring a robot operator control unit including storing, on a robot, a definition of a robot data communications protocol; communicating a request from a robot operator control unit to the robot for the definition of the robot data communications protocol; communicating, from the robot to the robot operator control unit, the definition of the robot data communications protocol; and configuring the robot operator control unit to receive telemetry data from the robot formatted according to the definition of the robot data communications protocol.

Variations may include one or more of the following: storing, on the robot, a definition of a robot control protocol; communicating a request from the robot operator control unit to the robot for the definition of the robot control protocol; communicating, from the robot to robot operator control unit, the definition of the robot control protocol; and configuring the robot operator control unit to send robot command and control data to the robot formatted according to the definition of the robot control protocol. In other variations, the communication of any protocol definitions from the robot to the operator control unit is accomplished by transmitting one or more configuration files from the robot to the operator control unit. The protocol definitions stored on the robot may be formatted with a tagged markup language, such as XML.

In still further variations, the method includes storing, on the robot, a definition of a robot function menu structure; communicating a request from the robot operator control unit to the robot for the definition of the robot function menu structure; communicating, from the robot to robot operator control unit, the definition of the robot function menu structure; and configuring the robot operator control unit to present a robot operating menu to a user formatted according to the definition of the robot function menu structure.

Another implementation provides a method of configuring a robot operator control unit including: storing, on a robot, a definition of a robot controller input mapping; communicating, in response to a request from a robot operator control unit, the definition of the robot controller input mapping from the robot to the robot operator control unit; and configuring the robot operator control unit to map input signals from at least one user input device, associated the robot operator control unit, according to the definition of the robot controller input mappings. The robot controller input mapping may be formatted with a tagged markup language such as XML.

Another implementation provides a method of configuring a robot operator control unit comprising: storing, on a robot, a definition of a robot instrument scene graphic; communicating, in response to a request from a robot operator control unit, the definition of the robot instrument scene graphic from the robot to the robot operator control unit; and configuring the robot operator control unit to display at least one robot control panel according to the definition of the robot instrument scene graphic.

Variations may include one or more of the following: the definition of the robot instrument scene graphic may be formatted as a scene graph such as an OSG scene graph. The scene graph may include a record of one or more sub scene graphs, which may correspond to respective robot control panels displayed on the robot operator control unit. The definition of the robot controller input mapping may formatted with a tagged markup language such as XML.

In another variation, the method may further include: storing, on the robot, a definition of a robot control protocol; communicating a request from the robot operator control unit to the robot for the definition of the robot control protocol; communicating, from the robot to robot operator control unit, the definition of the robot control protocol; and configuring the robot operator control unit to send robot command and control data to the robot formatted according to the definition of the robot control protocol.

In yet another variation, the method may further include: storing, on the robot, a definition of a robot controller input mapping; communicating, in response to a request from a robot operator control unit, the definition of the robot controller input mapping from the robot to the robot operator control unit; and configuring the robot operator control unit to map input signals from at least one user input device, associated the robot operator control unit, according to the definition of the robot controller input mappings.

In yet another variation, the method may further include: storing, on the robot, a definition of a robot controller input mapping; communicating, in response to a request from a robot operator control unit, the definition of the robot controller input mapping from the robot to the robot operator control unit; and configuring the robot operator control unit to map input signals from at least one user input device, associated the robot operator control unit, according to the definition of the robot controller input mappings.

And, in still another variation, the method may include: storing, on the robot, a definition of a robot function menu structure; communicating, in response to a request from a robot operator control unit, the definition of the robot function menu structure; and configuring the robot operator control unit to present a robot operating menu to a user formatted according to the definition of the robot function menu structure. The communication of the robot function menu structure from the robot to the operator control unit may be accomplished by transmitting one or more configuration files from the robot to the operator control unit.

In these several variations, the communication of all of the definitions from the robot to the operator control unit may be accomplished by transmitting a configuration file.

In another embodiment, a robot control system is provided including: a robot comprising a controller, a data memory operably coupled to the controller and holding a robot configuration file; an operator control unit comprising a scene graph display module, a protocol adapter module, a controller I/O module, and a connection marshaller module operative to request configuration data from the robot and configure the scene graph display module, the protocol adapter module, and the controller I/O module according to the configuration data.

In another embodiment, a robot operator control unit is provided including: a scene graph display module; a protocol adapter module; a controller I/O module; and a connection marshaller module operative to request configuration data from a robot and configure the scene graph display module, the protocol adapter module, and the controller I/O module according to the configuration file. The robot operator control unit may further include a publication/subscription database in which robot telemetry data is associated with nodes in a scene graph displayed by the scene graph display module.

The details of one or more embodiments of the invention are set forth in the accompanying drawings and the description below. Other features, objects, and advantages of the invention is apparent from the description and drawings, and from the claims.

### DESCRIPTION OF DRAWINGS

Fig. 1 is an architectural diagram representation of a robot operator control unit (OCU) design and configuration system
Fig. 2 is a block diagram of a robotic operator control unit (OCU).
Fig. 3 shows a flow chart of the control event path for control inputs to an OCU according to one implementation.
Fig. 4 shows a flow chart 400 of the data flow path for telemetry data sent from a robot to an OCU.
Fig. 5 shows a flow chart of a new robot activation or configuration sequence.
Fig. 6 shows a flow chart of a robot payload configuration sequence.

Like reference symbols in the various drawings indicate like elements.

### DETAILED DESCRIPTION

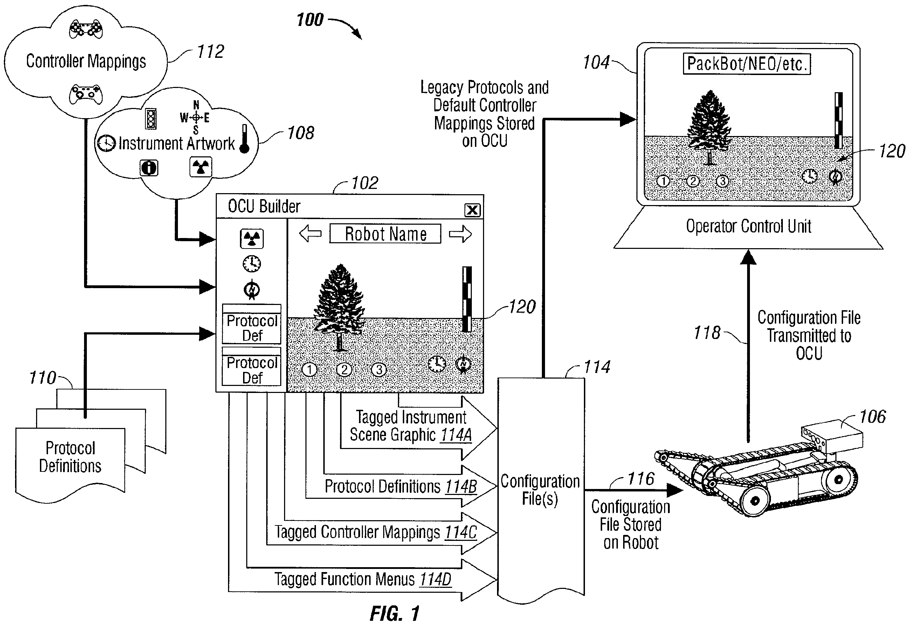

Fig. 1 is an architectural diagram representation of a robot operator control unit (OCU) design and configuration system 100. The depicted system may be used to design and configure OCU's for various robots or robot payloads. In preferred implementations, the system provides a robot the ability to store its own configuration file, which is then uploaded to an OCU to configure the OCU to control that robot. System 100 may also be referred to as a robot controller common architecture, including various design and configuration tools. In general, the system includes an OCU builder tool 102, which is employed to design and configure robotic OCU's 104 for controlling a robot 106.

With regard to the high level system diagram depicted in Fig. 1, the depicted OCU Builder 102 is preferably a stand-alone software application. Its purpose is to create the configuration files that is uploaded to the OCU device. Inputs to the OCU Builder are resource sets 108 making up the OCU Graphical User Interface (GUI), communication protocol definitions 110, and various controller mappings 112. The outputs from the OCU Builder are configuration files 114 that organize the graphical resources into a scene graph for rendering, controller device button/joystick mappings and protocol topic names or definitions, which bind the graphics and controller commands to network communication data. The configuration files 114 are loaded onto individual robots (flow step 116) for later upload to OCU devices 104 (flow step 118). Configuration files 114 are employed to configure an OCU Framework system running on OCU 104. The OCU Framework system is software that runs on the OCU device 104 hardware. The Framework system handles robot communication, control, and display of robot telemetry data.

In further detail, OCU Builder 102 is preferably a stand-alone application allowing the user to visually plan the layout of the graphical instruments (i.e., 120) used on the OCU device 104. In this implementation, OCU Builder 102 allows importing three types of data; instrument models 108 in graphical formats (preferably one supported by the preferred scene graph API, OpenSceneGraph (OSG)), controller mapping definitions 112, and communication protocol definitions 110. In a preferred implementation, the controller mappings 112 and communication protocol definitions 110 will be in an XML format. A protocol definition 110 preferably includes a list of communication data, data types and Aware Pub/Sub (publication/subscription) database topic names used for each piece of data.

From the set of instrument models 108, the user will choose which instruments will be displayed in each panel on the screen of the OCU device 104. The user will also arrange the instrument layout in each panel. The user will then be able to select a robot communication protocol definition 110 and bind the robot telemetry data topics to the various instruments 120 in each panel. Likewise, the user is able to identify which controller input devices present on OCU 104 (keyboards, joysticks, gamepads, touchscreens, etc.) will be used, and bind the controller input mapping to the robot control data topics.

Referring still to Fig. 1, the output from the OCU Builder 102 is a set of data files 114, which eventually will be uploaded to the OCU device 104. In this implementation, included in data files 114 is at least one OSG scene graph 114A, which is the entire graphical display for a particular robot. Other data files will include controller mapping 114C and communication protocol definitions 114B. Further, a data file of tagged function menus 114D is included. Preferably, items 114A-D are generated as data files and subsequently combined into a single configuration file 114. However, this is not limiting and the precise format of data generated by OCU builder 102, combined into configuration file 114, or loaded into robot 106 may vary. For example multiple configuration files may be limited onto robot 106, or a separate data file for protocol definitions were tagged function menus may never be generated, for example, as such items may be entries in a larger data file. In the depicted implementation, for data files are combined into one configuration file. Further, in other implementations, other robot configuration items may be included in a configuration file 114. In a preferred implementation, all data items in each file will be tagged with Pub/Sub topic names binding the controls and actions with the robot 106's networked data. XML the preferred tagging format, but others may be employed.

In use, in one scenario, default controller mappings for devices supported by a particular manufacturer will be loaded onto OCU devices prior to robot communication. Likewise, legacy robot protocols may be installed directly on OCU devices to support legacy protocols in use before the adoption of common architecture 100. To support control of legacy robots, default instrument-graphics data files will also require prior loading onto OCU devices.

Preferably, for generations of robots employing the common architecture 100, the protocol definitions 110 and instrument-graphics data files 108 will be loaded on the individual robots 106. Controller mapping definitions may or may not be loaded on the individual robots 106. Upon first contact with an OCU device 104, the robot 106will upload its configuration data files 114 to the OCU 104. Future contact between such a matched OCU/robot pair may only require a quick checksum of configuration files on both robot 106 and OCU 104 to determine if an upload is necessary.

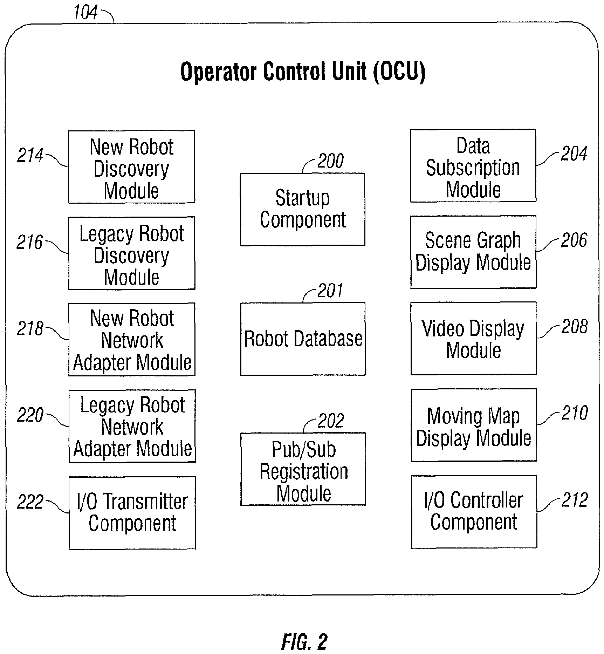

Fig. 2 is a block diagram of a robotic operator control unit (OCU). In the depicted implementation, OCU 104 includes several software modules referred to as the OCU Framework system. The OCU framework system is preferably software that runs on an operating system such as, for example, linux, which itself runs on the OCU device hardware. The framework handles robot communication, control, and display of robot telemetry data and the robot user interface.

The depicted startup component 200 runs at startup of the OCU to bring the system up to an operating state. Startup component 200 instantiates objects and creates connections between those objects. Use of inter-object connections and interfaces will be further described below. In a preferred embodiment, startup component 200 is built with configuration scripts in the Python programming language. Of course, other suitable programming languages may be used. The remaining components are preferably programmed in C++, Python, or a suitable database query language.

After startup, startup component 200 and control to the OCU Framework, which is largely event driven. In this implementation, the OCU GUI initialization is data driven by the configuration files uploaded from the individual robots upon first contact. The OCU GUI software includes components 204, 206, 208, and 210 in Fig. 2, which combined may be considered as a graphics component. In this implementation, the OCU GUI is built around an OSG scene graph displayed by scene graph module 206. In preferred implementations, the scene graph is configured such that the top most branches of the scene graph enumerate the views to each individual robot within communication range. Lower branches of the scene graph enumerate the various graphical panels of each robot's GUI. Final branches of the scene graph will contain each instrument-model within each panel of the GUI. The OCU Framework will leave window management (multiple panels per window, multiple windows, full screen, etc.) to the operating system on which it runs.

At the heart of the OCU Framework is an Publication/Subscription database 202 that drives communication between the robot network packets and the OCU graphical user interface (GUI). In use, when a new robot 106 is contacted by OCU 104, its GUI (a scene graph branch uploaded in a configuration file) will be added to the OCU for rendering. Instrument nodes within the scene graph will have been tagged with a subscription topic name defined by the OCU Builder 102. The data subscription module 204 associates the scene graph instrument nodes with their data streams by registering them with Pub/Sub registration module 202. During rendering frame updates, each instrument will retrieve its specific telemetry data via the subscribed topic in the Pub/Sub database. When communication packets arrive from each robot, the data within the packet will extracted and published to the same Pub/Sub database under topic names defined by the OCU Builder.

For implementations that support legacy robots, in order for legacy robots to not require software upgrades, default protocol definitions, controller-map definitions, and GUI scene graphs will preferably be stored directly on the OCU prior to contact with robots. During the robot/OCU connection handshaking, the OCU will determine which stored default GUI to load from memory and use with that particular robot.

Also included in OCU 104 is new robot discovery module 214, which manages the discovery and installation of configurations for robots employing configuration files 114 (Fig. 1). Legacy robots that do not have a conformant configuration file 114 are discovered by legacy robot discovery module 216. Referring to the new robot discovery module, this module 214 preferably operates with a common discovery packet to all new robots. A connection marshaller manages the robot database 201, which contains identities of known robots, records of their control adapter, IP address, protocol, and their last contact time. Module 214 further employs a Protocol Description Packet to in to inform the OCU of the robot's communication protocol.

Legacy robot discovery module 216 includes several protocol modules that are employed selectively to discover and interact with legacy robots. In one implementation, module 216 includes a TMR (tactical mobile robot) protocol module, a EOD/PCC Protocol Module, a JAUS (Joint Architecture for Unmanned Systems) Protocol Module, and other suitable legacy protocol modules that may be needed for communication with whatever legacy robots OCU 104 is intended to control.

Referring still to Fig. 2, OCU 104 includes a new robot network adapter module 218 and a legacy robot network adapter module 220. Again, the reference to "new robot" refers to robots compliant with the configurable OCU controller system described herein, while legacy robots may have proprietary OCU's that do not provide configuration files according to any of the implementations described herein. The new robot network adapter module 218 preferably manages runtime protocol descriptions by receiving uploaded protocol descriptions from robots. Module 218 also manages dynamic network connections, provided as needed for communication with conformant robots. Further, module 218 also provides Pub/Sub database mapping from received protocol communications or packets containing data or communications for posting to the Pub/Sub database. Legacy robot network adapter module 220, by contrast, may employ pre-defined protocol descriptions where dynamic connections are not supported or provided by the target robot. Legacy module 220 preferably also supports dedicated network connections to its target robots, and Pub/Sub database communication.

I/O transmitter component 222, in this implementation, includes a robot command module which performs I/O control to command conversion. The robot command module also contains command marshaller for grouping, ordering, and prioritizing commands to be sent. I/O transmitter component 222 also includes drivers for the transceiver that interacts with the robot controlled. In preferred implementations, the transceiver is a radio transceiver, but wireline communication channels such as, for example, a spooled fiber-optic cable, are also used.

Referring still to Fig. 2, OCU 104 includes a video display module 208 to feed one or more video displays received from robot cameras to the operator display screen. Similarly, a moving map display module 210 displays a map with relative locations of the operator and robot(s) that OCU 104 controls. The moving map may also display other robots in the vicinity from which the present OCU may receive information. A moving map may be implemented with GPS or triangulation data, or a combination of geolocation methods, and may include a terrain or area street map.

OCU 104 further includes I/O controller component 212, which manages the status of various input/output components installed on OCU 104. Preferably, component 212 includes a keyboard/mouse driver, joystick driver, game controller (Yoke) driver, and puck driver. Other suitable I/O devices may also be interfaced. Control input flow will be further described below.

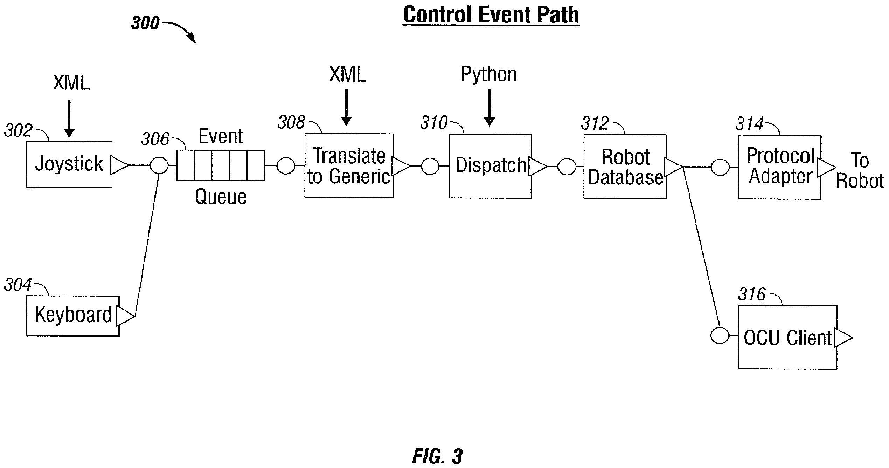

Fig. 3 shows a flow chart of the control event path for control inputs to an OCU according to one implementation. In the depicted control event path flow chart 300, a control event is generated by user interactivity with a user interface device such as joystick 302 or keyboard 304. The I/O controller component generates an XML message describing the input signal received from the user interface device as a control event. While XML is used in this implementation, other tagged markup languages, or a predefined untagged format may be employed. This XML event is passed to an event queue 306, which holds pending but unprocessed controller events. Preferably, event queue 306 is a FIFO queue, but other implementations may be used.

In the depicted implementation, but they joystick and keyboard input, the I/O controller component maps the joystick from signal values to key names. A "dead zone" conversion may be specified depending on the type of joystick and application. For example, a left joystick movement made on an attached Xbox controller joystick may be converted to a key name as shown in the XML piece in Table 1.

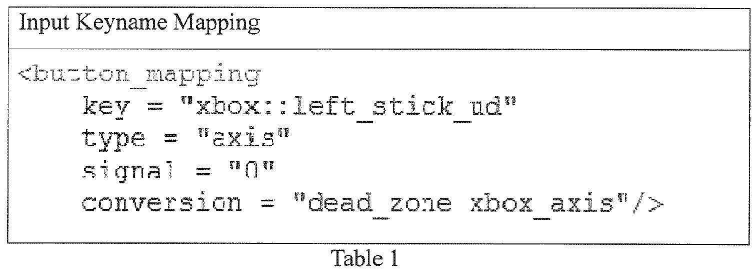

The I/O controller component also maps keyboard keys and joystick buttons to generic control functions, depending on the OCU mode or robot mode. Such mapping preferably accomplished in another XML file from the input keyname mapping shown in Table 1, however this is not limiting and the XML to map controller input to protocol output may be accomplished in various ways. Further while XML is preferred, of course other suitable conversion schemes may be used. As an example of keyname conversion to generic functions, the Table 1 keyname result is converted to generic fucnations by the XML code shown in Table 2.

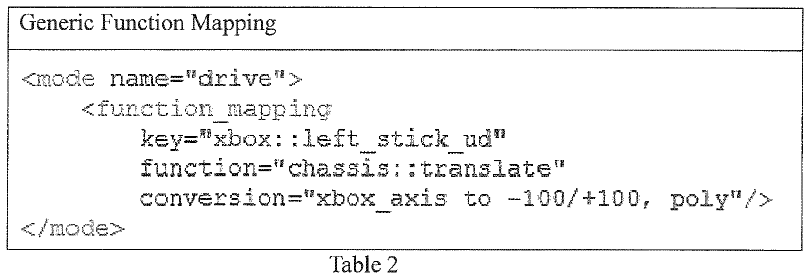

The generic function mapping shown in Table 2 happens, in this implementation, in step 308 in Fig. 3. After the translation to generic, the depicted control event path 300 proceeds to dispatch step 310. This step looks up the robot's protocol adapter in the robot database 312. From there, the generic function mapping is passed to the robot protocol adapter 314, which maps the generic functions to a network packet. For example, XML can mapping the generic function shown in Table 2 into a network packet is shown in Table 3.

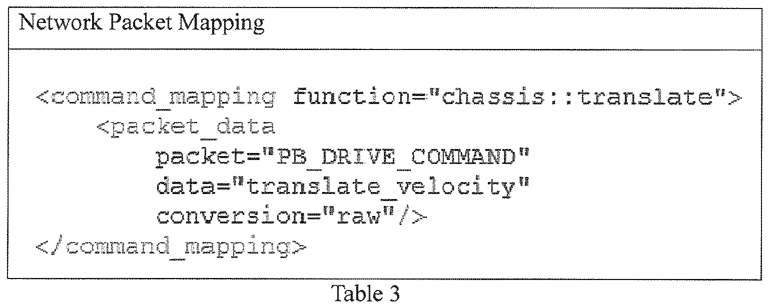

The protocol employed to transmit the resulting network packet may be customized in another file from that containing the code shown in Table 3.

The network packet is communicated to the robot from protocol adapter 314. From this point, the robot implements or handles the command. A single robot may have multiple activated protocol adapters for communication with different modules or payloads, for example.

Also depicted in Fig. 3 is a connection to an interface on OCU client 316. This interface provides a way to feed back consequences of control events to the I/O controller component. Such a scheme may be employed, for example, to adjust control input mapping or sensitivity where operator input activates such adjustment. For example, an operator pushes a button to change the control focus to a manipulator arm rather than robot maneuvering. In this case, a network packet would be passed to the OCU client causing an adjustment to the stick sensitivity and operating mode, as well as scene graph changes. Further control events are then processed under the new operating mode.

Fig. 3 depicts triangles and circles between the various modules. These represent "connections" and "interfaces" employed to communicate between modules. This scheme, also developed by assignee of the present application, is referred to as Aware 2.0. The scheme provides inter-module communication which may be understood as function pointers that work between components. Each depicted triangle represents a connection that is keyed to a particular interface, represented by a circle. Typically there is a one-to-one relationship between connections and interfaces, but a single interface may support multiple connections such as the depicted interface on the left side of event queue 306.

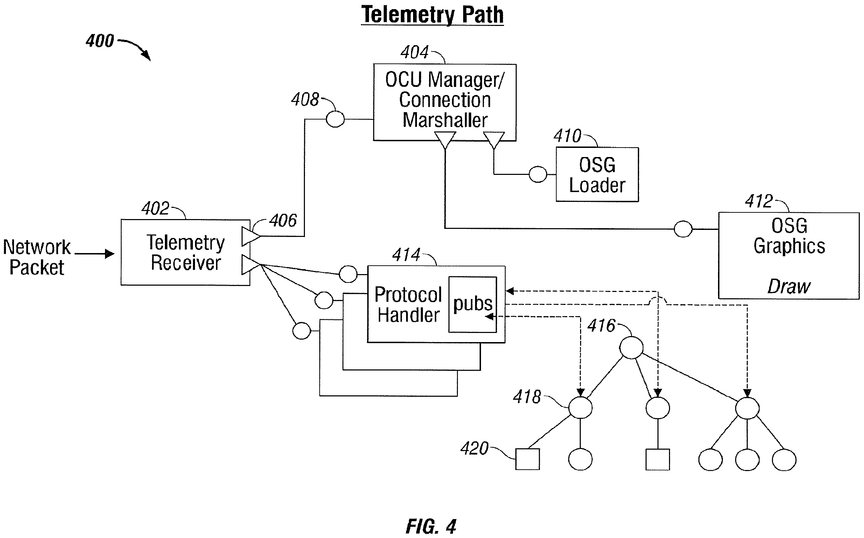

Fig. 4 shows a flow chart 400 of the data flow path for telemetry data sent from a robot to an OCU. In this implementation, network packet is received by the OCU transceiver 402 and passed to the new robot network adapter module 218 (Fig. 2). If the network adapter module does not recognize the source robot, it will pass the packet to be OCU manager/connection marshaller 404 to establish an association with the robot so that the robot may be recognized. In this implementation, the depicted components communicate via the connection/interface scheme described above. In the depicted flow chart the network adapter module 218 employs connection 406 which is linked to interface 408 exposed by connection marshaller 404. If the connection marshaller determines a new robot is present, it then initiates the activation sequence for a new robot. Such an activation sequence is further described below. The OCU manager/connection marshaller creates a need protocol handler 414 for the robot, loads a new OSG scene graph for the robot with OSG loader 410, and activates the scene graph with the OSG graphics component 412, which then draws the scene graph in the appropriate place on the OCU display. After this, the scene is drawn as part of the cyclical graphics update routine running on OCU 104.

Future telemetry packets received from the robot at telemetry receiver 402 will be recognized, and sent via a connection to that robots protocol handler (or "protocol adapter") 414. In this implementation, each protocol adapter has a packet dictionary describing the packet contents. When a packet comes in to a protocol adapter it looks up the structure of the packet in the protocol packet disctionary and demarshals or disassembles the packet into place in the robot Pub/Sub database by publishing the telemetry data received from the robot to the appropriate Pub/Sub notices in the OCU Pub/Sub database.

In one implementation, protocols are defined with a tagged markup language such as, for example, XML. A protocol is preferably defined as a protocol class containing protocol definitions for multiple packet types. An example XML code snippet defining a protocol class is shown in Table 4.

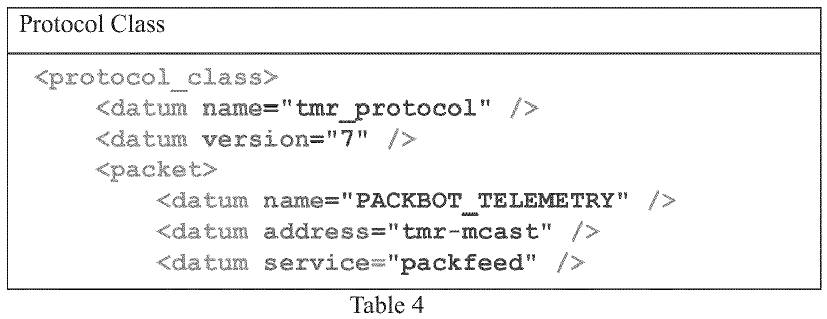

Typically, a packet protocol is defined by the datatype and data position within the packet. Table 5 shows an example protocol packet definition or Packbot robot telemetry data packet.

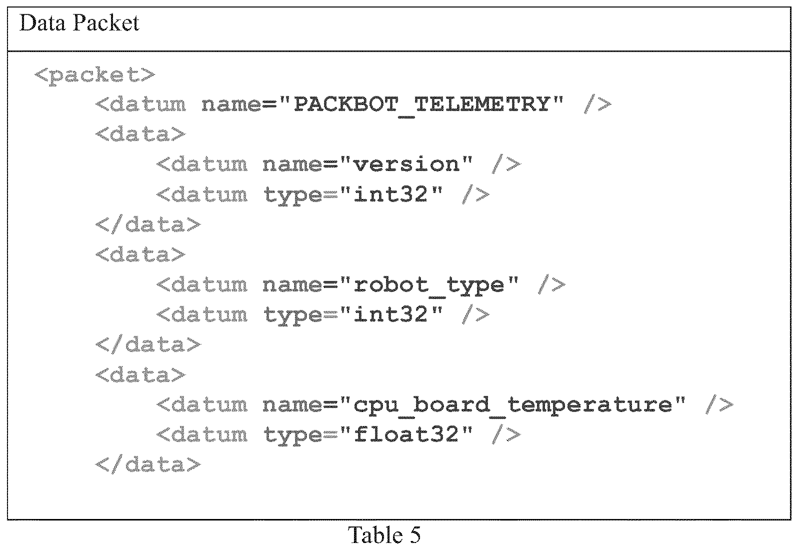

In this implementation, metadata associated with packet variable data may define screen position and the type of instrument viewed on the OCU. Table 6 shows an example metadata set associated with certain data in the Packbot telemetry data packet.

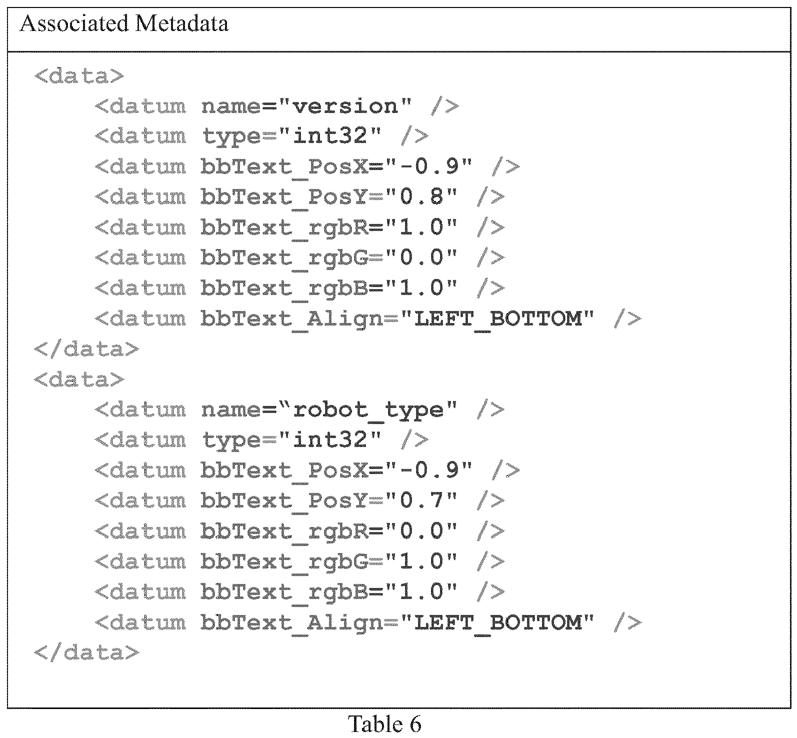

Fig. 4, also depicted as an abstract representation of a scene graph 416. The depicted dotted lines shows associations between each piece of received telemetry data and its associated display in scene graph 416. The depicted scene graph node 418 is a degree of freedom bead ("DOF bead") that is subscribed or aware of the associated telemetry data notice in the Pub/Sub database. For example, DOF bead 418 may be associated with a robot speed indicator. Such a display may appear in the appropriate display location designated by scene graph 416. Typically a DOF bead will have an associated graphic 420 that may be for example, a speedometer dial face. Other items may be associated, such as a dial needle. When the scene graph is displayed it is traversed, and the DOF beads are updated with their subscribed values. The associated graphics are then typically rotated, scaled, or otherwise translated with graphics routines such as matrix operations. For example, a DOF bead 418 may indicate how far to rotate a needle on a depicted dial graphic. The combined result is displayed in this scene graph's scene, resulting in a display panel showing the robot's telemetry data to the operator. In one embodiment, the scene graph display module updates all its depicted Pub/Sub values before each draw cycle.

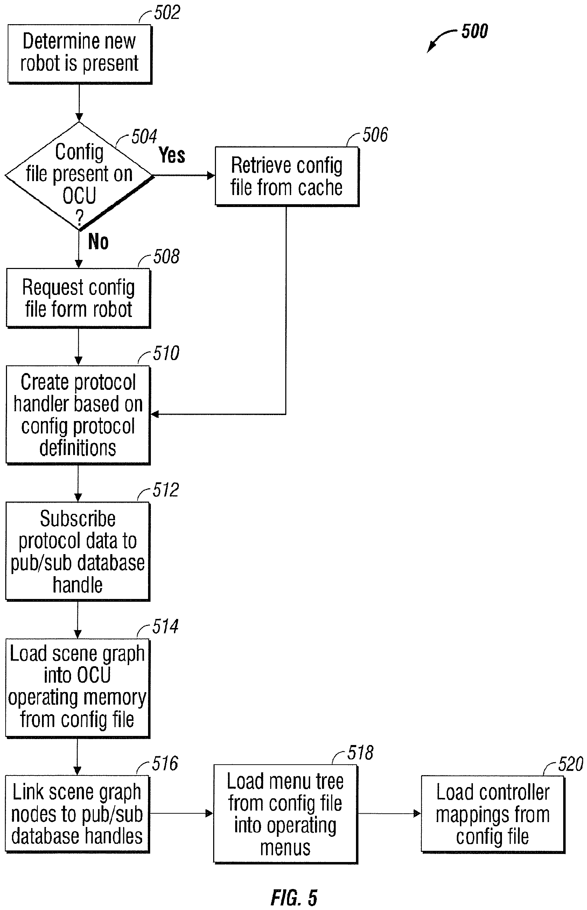

Fig. 5 shows a flow chart 500 of a new robot activation or configuration sequence. If the connection marshaller determines a new robot is present in step 502, it then obtains identifying information from robot and checks to see if a configuration file for the robot is stored in memory on the OCU. If the config file is present for the identified robot config file is retrieved from memory in step 506. If no configuration file is stored on the OCU for the identified robot (step 504), the connection marshaller requests a configuration file from the robot in step 508. Upon receiving the config file, marshaller creates a protocol handler based on the config file's protocol definitions in step 510. The marshaller then subscribes the data fields in the protocol data to be Pub/Sub database and pulling their names or handles as designated by the robot config file in step 512. Next the robot loads the scene graph provided in the robot config file into OCU operating memory in step 514. The marshaller links or subscribes the appropriate scene graph nodes to their respective Pub/Sub database handles in step 516. The marshaller loads the menu tree information provided in the robot config file into the OCU operating menus in step 518. Finally, the OCU loads controller mappings from the robot config file in step 520.

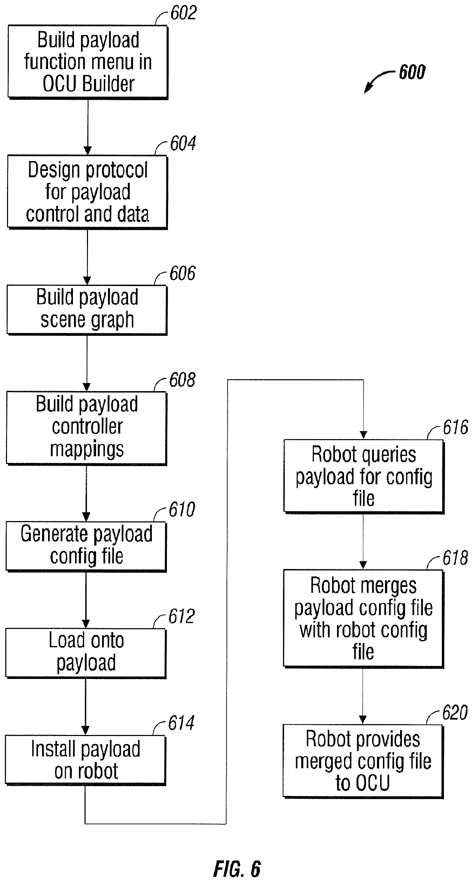

Fig. 6 shows a flow chart of a robot payload configuration sequence. In this scenario, a robot is to be fitted with a special-purpose payload, such as, for example, and IR camera payload, or a radiation or nerve gas detector. In such a case, the robot's operator control unit (OCU) should be able to control the payload and received telemetry data or video from the payload. In this implementation, the OCU is configured to control the payload by a combined configuration file provided by the robot. In the depicted step 602, the system designer builds a payload function menu of command for the OCU user to activate features on the payload. In step 604, the designer builds a protocol to exchange payload control commands and data with the OCU. In step 606, the designer builds a payload scene graph containing one or more panels having graphics with readouts, dials, soft buttons, or video views, for example. This scene graph is preferably an OSG scene graph. Next in step 608, the designer builds the payload controller mappings to match the OCU controller inputs with payload functions. For example, controller mappings may map joystick movements to control a manipulator arm payload. These for design products are combined into one configuration file in step 610. While particular order is shown for generating the design products, this is not limiting and design products may be made by different designers in different orders.

After a payload config file is generated in step 610, the config file is loaded onto the payload and step 612. The payload may then be installed on the robot in step 614. In this implementation, the robot next queries the payload to request the payload's config file in step 616. In step 618, the robot examines the payload config file to determine the appropriate manner to merge payload config file with the robot's own config file. This may be done, for example, but a set of rules that determine where, in the robots scene graph, a payload control interface with a certain functionality will be presented. For example, a manipulator arm may require a video view and joystick and button control configuration to be accessible on the OCU screen at or near the top level of the robot scene graph. Such a scenario provides the operator quick access to the functionality of the manipulator arm payload. As another example, a radiation detector payload may present in the robots scene graph in the top level instrument panel, a readily visible readout to indicate dangerous radiation levels. The config file merging functionality described in step 618 is preferably accomplished by the robots controller or computer. Next in step 620, robot provides emerged configuration file to the OCU upon request. The OCU been configured to itself as described herein to provide a control interface to both the robot and the payload according to the format of instructions contained in emerged configuration. More than one payload may be so configured on a single robot. The merging functionality performed by the robots controller in the program, for example, to give priority and position in the robot's scene graph and menu tree to a certain type of payload designated as a higher priority payload, over another type of payload designated as a lower priority payload.

While this payload configuration scheme is shown for this implementation, of course other schemes may be employed to configure payloads in the context of the OCU configuration systems described herein. For example, robots that are not provided the software to merge payload configuration files with their own robot configuration file may be provided with a combined configuration file (robot + payload) authored using the OCU builder. In another example scheme, payload config file may be sent separately to the OCU and associated with their host robot, and the operator may choose where to display the payload control panel.

Although the present invention is defined in the attached claims, it is to be understood that the invention can alternatively also be defined in accordance with the following embodiments:

### Embodiments:

1. A method of configuring a robot operator control unit (104) comprising:
   generating a configuration file (114) for a robot (106);
   transmitting the configuration file (114) from the robot (106) to the operator control unit (104); and
   adjusting the operator control unit (104) based on the configuration file (114).
2. The method of embodiment 1 wherein adjusting includes adjusting control configurations and display topology on the operator control unit (104) based on the configuration file (114).
3. The method of embodiments 1 or 2 further comprising adjusting menu options on the operator control unit (104) based on the configuration file (114).
4. The method of any of embodiment s 1-3 in which the configuration file (114) includes a menu tree description including menu structure indicators and command identity indicators.
5. The method of embodiment 4 in which the menu tree description is formatted in a tagged markup language.
6. The method of any of embodiments 1-5 in which the configuration file (114) includes an indicator of one or more instrument scene graphics (120).
7. The method of any of embodiments 1-6 in which the configuration file (114) includes one or more controller mapping indicators (114C).
8. The method of embodiment 7 in which at least one of the one or more controller mapping indicators (114C) is a tagged controller mapping indicator.
9. The method of any of embodiments1-8 in which the configuration file (114) includes one or more scene graph descriptors (114A).
10. The method of embodiment 9 in which at least one of the one or more scene graph descriptors (114A) is an OSG scene graph.
11. The method of any of embodiments 1-10 in which the configuration file (114) includes one or more protocol definitions (114B).
12. The method of embodiment 11 in which the one or more protocol definitions (114B) is formatted in a tagged markup language.
13. The method any of embodiments 1-12 further comprising:
   storing, on the robot (106), a definition of a robot data communications protocol as part of the configuration file (114);
   communicating a request from a robot operator control unit (104) to the robot (106) for the definition of the robot data communications protocol; and
   configuring the robot operator control unit (104) to receive telemetry data from the robot (106) formatted according to the definition of the robot data communications protocol.
14. The method of any of embodiments 1-13 further comprising:
   storing, on the robot, a definition of a robot control protocol as part of the configuration file (114);
   communicating a request from the robot operator control unit (104) to the robot (106) for the definition of the robot control protocol; and
   configuring the robot operator control unit (104) to send robot command and control data to the robot (106) formatted according to the definition of the robot control protocol.
15. The method of any of embodiments 13-14 wherein the communication of any protocol definitions from the robot (106) to the operator control unit (104) is accomplished by transmitting one or more configuration files (114) from the robot (106) to the operator control unit (104).
16. The method of any of embodiments 13-15 wherein each of the protocol definitions stored on the robot (106) are formatted with a tagged markup language.
17. The method of any of embodiments 1-16 further comprising:
   storing, on the robot, a definition of a robot function menu structure as part of the configuration file (114);
   communicating a request from the robot operator control unit (104) to the robot (106) for the definition of the robot function menu structure; and
   configuring the robot operator control unit (104) to present a robot operating menu to a user formatted according to the definition of the robot function menu structure.
18. The method of embodiment 17 wherein the communication of the robot function menu structure from the robot to the operator control unit (104) is accomplished by transmitting one or more configuration files from the robot (106) to the operator control unit (104).
19. The method of any of embodiments 17-18 wherein the robot function menu structure stored on the robot (106) is formatted with a tagged markup language.
20. The method of any of embodiments 1-19 further comprising:
   storing, on the robot (106), a definition of a robot controller input mapping;
   communicating a request from the robot operator control unit (104) to the robot (106) for the definition of the robot controller input mapping; and
   configuring the robot operator control unit (104) to map input signals from at least one user input device, associated with the robot operator control unit (104), according to the definition of the robot controller input mappings.
21. The method of embodiment 20 wherein the definition of the robot controller input mapping is formatted with a tagged markup language.
22. The method of any of embodiments 1-21 further comprising:
   storing, on the robot (106), a definition of a robot instrument scene graphic;
   communicating a request from the robot operator control unit (104) to the robot (106) for the definition of the robot instrument scene graphic; and
   configuring the robot operator control unit (104) to display at least one robot control panel according to the definition of the robot instrument scene graphic.
23. The method of embodiment 22 wherein the definition of the robot instrument scene graphic is formatted as a scene graph.
24. The method of embodiment 23 wherein the scene graph is an OSG scene graph.
25. The method of embodiment 23 wherein the scene graph comprises a record of one or more sub scene graphs.
26. The method of embodiment 25 wherein at least one of the one or more sub scene graphs corresponds to a respective robot control panel displayed on the robot operator control unit (104).
27. The method of any of embodiments 22-26 wherein the definition of the robot controller input mapping is formatted with a tagged markup language.
28. The method of any of embodiments 5, 12, 16, 21 or 27 wherein the tagged markup language is XML.
29. A robot operator control unit (104) comprising:
   a scene graph display module (206);
   a protocol adapter module;
   a controller I/O module (212); and
   a connection marshaller module operative to request configuration data from a robot (106) and configure the scene graph display module (206), the protocol adapter module, and the controller I/O module (212) according to a configuration file (114).
30. The robot operator control unit (104) of embodiment 29 further comprising a publication/subscription database in which robot telemetry data is associated with nodes in a scene graph displayed by the scene graph display module (206).
31. A robot control system comprising:
   a robot (106) comprising a controller, a data memory operably coupled to the controller and holding a robot configuration file; and
   an operator control unit (104) in accordance with embodiment 39 or 40.

A number of implementations have been described. Nevertheless, it will be understood that various modifications may be made without departing from the spirit and scope of the following claims. Accordingly, other implementations are within the scope of the following claims.

## Claims

1. A method of configuring a robot operator control unit (104) comprising:
generating a configuration file (114) for a robot (106);
transmitting the configuration file (114) from the robot (106) to the operator control unit (104); and
adjusting the operator control unit (104) based on the configuration file (114),
wherein adjusting includes adjusting control configurations and display topology on the operator control unit (104) based on the configuration file (114).

2. The method of claim 1 further comprising:
storing, on the robot (106), a definition of a robot data communications protocol as part of the configuration file (114);
communicating a request from a robot operator control unit (104) to the robot (106) for the definition of the robot data communications protocol; and
configuring the robot operator control unit (104) to receive telemetry data from the robot (106) formatted according to the definition of the robot data communications protocol.

3. The method of any of claims 1-2 further comprising:
storing, on the robot, a definition of a robot control protocol as part of the configuration file (114);
communicating a request from the robot operator control unit ( 104) to the robot ( 106) for the definition of the robot control protocol; and
configuring the robot operator control unit (104) to send robot command and control data to the robot (106) formatted according to the definition of the robot control protocol.

4. The method of any of claims 1 to 3, further comprising:
loading default controller mappings for devices supported by a particular manufacturer onto the operator control unit (104) prior to robot communication.

5. The method of any of claims 1 to 4, further comprising:
installing legacy robot protocols directly on the operator control unit (104) to support legacy protocols in use before adjusting the operator control unit (104).

6. The method of claim 5, further comprising:
loading default instrument-graphics data files onto the operator control unit (104) to support control of legacy robots before adjusting the operator control unit (104).

7. The method of claim 6, further comprising:
upon first contact of an individual robot (106) with the operator control unit (104), uploading its configuration data files (114) to the operator control unit (104).

8. The method of any of claims 1 to 7 further comprising adjusting menu options on the operator control unit (104) based on the configuration file (114).

9. The method of any of claims 1-8 in which the configuration file (114) includes an indicator of one or more instrument scene graphics (120).

10. The method of any of claims 1-9 in which the configuration file (114) includes one or more controller mapping indicators (114C).

11. The method of any of claims 1-10 in which the configuration file (114) includes one or more scene graph descriptors (114A).

12. The method of claim 11 in which at least one of the one or more scene graph descriptors (114A) is an OSG scene graph.

13. A robot operator control unit (104) comprising:
a scene graph display module (206);
a protocol adapter module;
a controller I/O module (212); and
a connection marshaller module operative to request configuration data from a robot (106) and configure the scene graph display module (206), the protocol adapter module, and the controller I/O module (212) according to a configuration file (114).

14. A robot control system comprising:
a robot (106) comprising a controller, a data memory operably coupled to the controller and holding a robot configuration file; and
an operator control unit (104), wherein the robot control system is configured to execute any of methods 1 to 12 or 15.

15. A method of configuring a robot operator control unit (104) comprising:
generating a configuration file (114) for a robot (106);
transmitting the configuration file (114) from the robot (106) to the operator control unit (104);
adjusting the operator control unit (104) based on the configuration file (114);
storing, on the robot (106), a definition of a robot data communications protocol as part of the configuration file (114);
storing, on the robot, a definition of a robot control protocol as part of the configuration file (114);
communicating a request from a robot operator control unit (104) to the robot (106) for the definition of the robot data communications protocol;
communicating a request from the robot operator control unit ( 104) to the robot ( 106) for the definition of the robot control protocol;
configuring the robot operator control unit (104) to receive telemetry data from the robot (106) formatted according to the definition of the robot data communications protocol; and
configuring the robot operator control unit (104) to send robot command and control data to the robot (106) formatted according to the definition of the robot control protocol.
